# EUROPÄISCHE PATENTSCHRIFT

(11) **EP 2 499 473 B1**
(45) Veröffentlichungstag und Bekanntmachung des Hinweises auf die Patenterteilung: **02.08.2017**
(21) Anmeldenummer: 09756255.7
(22) Anmeldetag: 09.11.2009
(51) Int. Cl.: G01J 1/42, G01J 9/00, B23K 26/06, B23K 26/08

(54) **VERFAHREN UND EINRICHTUNG ZUR UNTERSUCHUNG DYNAMISCHER WELLENFRONTVERZERRUNGEN EINES LASERSYSTEMS**
METHOD AND DEVICE FOR EXAMINING A LASER SYSTEM
PROCÉDÉ ET DISPOSITIF POUR EXAMINER UN SYSTÈME À LASER

(43) Veröffentlichungstag der Anmeldung: 19.09.2012
(73) Patentinhaber: WaveLight GmbH, 91058 Erlangen (DE)
(72) Erfinder: FÖSEL, Matthias, 96117 Memmelsdorf (DE); KITTELMANN, Olaf, 14109 Berlin (DE); VOGLER, Klaus, 99444 Blankenhain (DE)
(74) Vertreter: Katérle, Axel
(86) Internationale Anmeldenummer: PCT/EP2009/008001
(87) Internationale Veröffentlichungsnummer: WO 2011/054367

(56) Entgegenhaltungen:
- STANISLAV KONOROV ET AL: "Third-harmonic generation as a local probe for on-line monitoring of femtosecond optical breakdown in transparent materials; Third-harmonic generation as a local probe for on-line monitoring of femtosecond optical breakdown in transparent materials" JOURNAL OF OPTICS. A, PURE AND APPLIED OPTICS, INSTITUTE OF PHYSICS PUBLISHING, BRISTOL, GB, Bd. 5, Nr. 4, 1. Juli 2003 (2003-07-01), Seiten 362-366, XP020081067 ISSN: 1464-4258
- MIYAGAWA S ET AL: "Measurement and calculation of laser beam spot distortion caused by dynamic deformation of scanning mirror" OPTICAL MEMS AND THEIR APPLICATIONS CONFERENCE, 2005. IEEE/LEOS INTERN ATIONAL CONFERENCE ON OULU, FINLAND AUG. 1-4, 2005, PISCATAWAY, NJ, USA,IEEE, 1. August 2005 (2005-08-01), Seiten 137-138, XP010853287 ISBN: 978-0-7803-9278-6

## Beschreibung

Die Erfindung befasst sich mit der Untersuchung eines Lasersystems, um Wellenfrontverzerrungen zu detektieren, die durch dynamische Stellvorgänge innerhalb des Lasersystems hervorgerufen werden können. Die hier betrachteten Lasersysteme dienen zur Materialbearbeitung, wobei das zu bearbeitende Material jeglicher Natur sein kann. Neben toter Materie sind auch biologische Materialien vorstellbar, die mit einem Lasersystem der hier betrachteten Art bearbeitbar sind. Ein beispielhaftes biologisches Material ist humanes Augengewebe, beispielsweise korneales Gewebe oder Linsengewebe.

Bei der lasertechnischen Bearbeitung von Materialien setzen sich sogenannte Femtosekunden-Lasersysteme (kurz Fs-Lasersysteme) mehr und mehr durch. Insbesondere gilt dies für die Bearbeitung solcher Materialien, die im sichtbaren Spektralbereich transparent sind. Fs-Lasersysteme arbeiten mit gepulster fokussierter Laserstrahlung, deren Pulsdauern im Bereich von Femtosekunden liegen. Besonders gut eignen sich Fs-Lasersysteme zur Erzeugung von Schnitten in der Tiefe des zu bearbeitenden Materials. Es versteht sich, dass das Material hierzu für die Laserstrahlung transparent sein muss. Bei entsprechend starker Fokussierung der Laserstrahlung kann die Laserleistung in das Innere des zu bearbeitenden Materials eingekoppelt werden, ohne dass die oberhalb des Fokuspunkts liegenden durchstrahlten Materialbereiche geschädigt werden. Der Vorgang, der im Fokuspunkt stattfindet, wird als Photodisruption bezeichnet. Im Fokuspunkt wird aufgrund der hochintensiven Strahlung die Schwelle für die Entstehung eines Mikroplasmas überschritten; es kommt zur Verdampfung einer Materialkugel mit einem Durchmesser von beispielsweise etwa 1µm. Als Folge entsteht eine Mikroblase mit einem Durchmesser von beispielsweise etwa 5 bis 12µm, die das umliegende Material voneinander trennt und anschließend komplett in die Umgebung diffundiert.

Durch die extrem kurze Einwirkzeit pro Femtosekundenpuls kann keine (zumindest keine wesentliche) Wärmeleitung zu den umliegenden Materialbereichen stattfinden. Nach Dissipation des Plasmas ist deshalb sämtliche wirksame Energie sowie Wärme im wesentlichen vollständig wieder aus dem Fokusort entfernt. Der bei der Bearbeitung transparenter Materialien mittels Fs-Laserstrahlung genutzte Elementarprozess wird oftmals auch als laserinduzierter optischer Durchbruch bezeichnet. Stand der Technik ist aus S. Konorov et al.: "Third-harmonic generation as a local probe for on-line monitoring of femtosecond optical breakdown in transparent materials", JOURNAL OF OPTICS. A: PURE AND APPLIED OPTICS, Bd. 5, Nr. 4, 1. Juli 2003, Seiten 362-366 und Miyagawa et al.: "Measurement and calculation of laser beam spot distortion caused by dynamic deformation of scanning mirror", OPTICAL MEMS AND THEIR APPLICATIONS CONFERENCE, 2005. IEEE/LEOS INTERNATIONAL CONFERENCE ON OULU, FINLAND AUG. 1-4, 2005, Seiten 137-138 bekannt. Gängige Lasersysteme sind mit geeigneten Ablenkmitteln (üblicherweise bezeichnet als Scanner) ausgerüstet, welche eine zumindest transversale, insbesondere auch longitudinale Ortssteuerung des Fokuspunkts ermöglichen. Longitudinal bezeichnet hierbei eine Richtung entlang des Strahlengangs der Laserstrahlung, während transversal eine Richtung in einer Ebene senkrecht hierzu bezeichnet. Eine in der Fachwelt übliche Notation bezeichnet die Transversalebene als x,y-Ebene und die Longitudinalrichtung als z-Richtung. Setzt man durch entsprechende Steuerung der Ablenkmittel eine hinreichende Anzahl von beispielsweise mehreren hundert oder sogar mehreren tausend der durch die obige Plasmaentladung entstandenen Hohlräume in einer gewünschten Form dreidimensional aneinander, so entsteht ein Schnitt im zu bearbeitenden Material. Nahezu beliebige Schnittfiguren sind auf diese Weise erzeugbar.
Es ist ohne weiteres nachvollziehbar, dass beispielsweise bei Augenbehandlungen höchste Anforderungen an die Schneidpräzision gestellt werden. Hierzu bedarf es eines äußerst präzisen Fokuspunkts der Fs-Laserstrahlung und einer hohen Spitzenintensität. Es hat sich gezeigt, dass es während des Scannens der Laserstrahlung (d.h. bei transversaler oder/und longitudinaler Verlagerung des Fokuspunkts nach Maßgabe der zu erzielenden Schnittfigur) zu vorübergehenden Beeinträchtigungen der Fokussierbarkeit der Laserstrahlung kommen kann. Es hat sich ferner gezeigt, dass solche Beeinträchtigungen durch massenträgheitsbedingte Verformungen optischer Komponenten hervorgerufen werden können, die im Zuge des Scanprozesses verstellt werden. Die regelmäßig erwünschten kurzen Bearbeitungszeiten bedingen entsprechend hohe Verstellgeschwindigkeiten der für die transversale bzw. longitudinale Ortssteuerung des Fokuspunkts verwendeten Ablenkkomponenten. Die Massenträgheit der Ablenkkomponenten kann bei diesen Verstellgeschwindigkeiten unerwünschte Verformungen bewirken, die einen signifikanten Einfluss auf die Wellenfrontqualität der Laserstrahlung haben. Solche Verformungen sind insbesondere dann zu befürchten, wenn die Ablenkkomponenten in rascher Folge oszillierend verstellt werden (d.h. hin und her). So kann beispielsweise für herkömmliche Scannerspiegel, wie sie häufig für die transversale Fokussteuerung eingesetzt werden, eine nicht unerhebliche Verformung der Oberflächen insbesondere im Bereich der Spiegelränder festgestellt werden. Diese Verformungen führen dazu, dass aus einer einfallenden ebenen Wellenfront eine mehr oder weniger stark verzerrte reflektierte Wellenfront wird. Solche Verzerrungen verschlechtern die Fokussierbarkeit in der Bearbeitungsebene und mindern dementsprechend die Schneidpräzision. Wellenfrontverzerrungen können außerdem ihren Ursprung in der Laserquelle selbst haben.

Aufgabe der Erfindung ist es, dynamische Wellenfrontverzerrungen der Laserstrahlung eines Lasersystems messtechnisch zu erfassen, um so die Strahlungsqualität und Fokussierbarkeit der Strahlung untersuchen zu können.

Zur Lösung dieser Aufgabe sieht die Erfindung nach einem Gesichtspunkt ein Verfahren zur Untersuchung eines Lasersystems vor, welches einen fokussierten Laserstrahl bereitstellt und eine steuerbare Ablenkanordnung zur transversalen oder/und longitudinalen Ortssteuerung des Strahlfokus aufweist, wobei das Verfahren umfasst:
- Richten des Laserstrahls oder eines daraus nach der Ablenkanordnung abgezweigten Teilstrahls auf ein optisch-nichtlineares Medium zur Erzeugung frequenzvervielfachter Strahlung, deren Wellenlänge einer ungeraden höheren Harmonischen der Wellenlänge des Laserstrahls entspricht,
- Aktivieren der Ablenkanordnung,
- Messen einer Leistung der frequenzvervielfachten Strahlung bei aktivierter Ablenkanordnung.

Die Erfindung lehrt, für die Untersuchung der Fokussierbarkeit gescannter Laserstrahlung Prozesse zu nutzen, deren Effizienz von der Intensität der applizierten Laserstrahlung abhängt. Nichtlineare Frequenzmischungen erfüllen diese Anforderung. Soweit dynamische Veränderungen der Strahlungsqualität bei transversalem Scannen der Laserstrahlung untersucht werden sollen, ist eine weitere Forderung, dass die Effizienz der Prozesses nicht (oder zumindest nicht wesentlich) von der Richtung der applizierten Laserstrahlung abhängen soll (die je nach transversaler Fokusposition unterschiedlich sein kann). Hierfür empfehlen sich Vervielfachungsprozesse ungerader Ordnung (dritte Ordnung, fünfte Ordnung, siebente Ordnung usw.) in isotropen Medien. Da mit höherer Ordnung allerdings mit einem Absinken der Umwandlungseffizienz zu rechnen ist, wird im Rahmen der Erfindung der Verdreifachungsprozess bevorzugt.

Eine 3-Wellen-Mischung (Frequenzverdopplung) in einem optisch-nichtlinearen Kristall ist dagegen für die Untersuchung transversal gescannter Laserstrahlung nicht geeignet. Eine solche 3-Wellen-Mischung verlangt in der Regel ein anisotropes Medium, wobei die Umwandlungseffizienz stark von der Einstrahlungsrichtung abhängt (Phasenanpassung). Da sich beim transversalen Scannen die Einstrahlrichtung mehr oder weniger stark ändert, würde dies das Messergebnis überlagern und verfälschen.

Bei der Frequenzverdreifachung hängt die Intensität der frequenzverdreifachten Strahlung (nachfolgend kurz THG-Strahlung; THG: Third Harmonic Generation) kubisch von der Intensität der einfallenden Strahlung ab. Die Effizienz dieses Prozesses hängt somit von der Spitzenintensität der in das nichtlineare Medium applizierten Strahlung ab, die ihrerseits von der räumlichen Qualität (Taillendurchmesser, Wellenfrontverlauf) und der zeitlichen Qualität (Verlauf der Impulseinhüllenden, d.h. Impulsdauer) der Strahlung abhängt. Soweit andere Einflussparameter ausgeschlossen werden können, ist daher eine temporäre Leistungsänderung der THG-Strahlung auf eine Änderung der Fokussierbarkeit der applizierten Laserstrahlung zurückführbar. Eine solche Änderung der Fokussierbarkeit kann beispielsweise von einer dynamischen Änderung des Wellenfrontverlaufs der applizierten Laserstrahlung stammen.

In einer bevorzugten Ausgestaltung wird das gemessene THG-Signal (gemessene Leistung der frequenzverdreifachten Strahlung) als Funktion der Zeit oder/und als Funktion der Scannerposition aufgezeichnet. Dies ermöglicht es, sozusagen in Echtzeit und ohne Zerstörung irgendwelcher Testobjekte die Fokussierbarkeit der Laserstrahlung dynamisch als Funktion der Scannerposition zu erfassen. Scannerposition bezeichnet hierbei diejenige Einstellung der Ablenkkomponenten, die für eine Einstellung des Strahlfokus auf eine bestimmte transversale oder/und longitudinale Position erforderlich ist.

Für die Durchführung der Untersuchung wird das nichtlineare Medium zweckmäßigerweise so angeordnet, dass der Laserstrahl bzw. der daraus abgezweigte Teilstrahl auf das nichtlineare Medium fokussiert wird. Das nichtlineare Medium kann beispielsweise ein Kristall sein, es sind aber auch andere Materialien denkbar, etwa Polymere oder Glas.

Die Leistungsmessung der frequenzvervielfachten Strahlung erfolgt, während die Ablenkanordnung aktiv ist, d.h. während der Laserstrahl in transversaler oder/und longitudinaler Richtung gescannt wird. Bevorzugt umfasst das Aktivieren der Ablenkanordnung eine oszillierende Verstellung mindestens einer Ablenkkomponente der Ablenkanordnung. Das dynamische Verhalten der Wellenfront der Laserstrahlung kann je nach Oszillationsfrequenz oder Oszillationshub unterschiedlich sein. Insbesondere kann es sein, dass die Wellenfrontverzerrungen stärker werden, je höher die Oszillationsfrequenz oder je größer der Oszillationshub wird. Dementsprechend umfasst das Aktivieren der Ablenkanordnung bevorzugt eine Veränderung der Oszillationsfrequenz oder/und des Oszillationshubs der mindestens einen Ablenkkomponente. Auf diese Weise kann das dynamische Verhalten der Wellenfrontverzerrungen abhängig von der Oszillationsfrequenz oder/und des Oszillationshubs erfasst werden.

Die Ablenkanordnung kann sich aus mehreren Ablenkkomponenten (z.B. Scannerspiegel) zusammensetzen, die jeweils nur eine Teilablenkung ermöglichen, beispielsweise nur in einer Richtung. Jede dieser Ablenkkomponenten kann einen unterschiedlichen Einfluss auf die Dynamik der Wellenfrontverzerrungen beim Scannen des Laserstrahls haben. Es ist deshalb zweckmäßig, wenn nicht nur der dynamische Einfluss der Ablenkanordnung als Ganzes auf die Fokussierbarkeit des Laserstrahls ermittelt wird, sondern auch der dynamische Einfluss jeder einzelnen Ablenkkomponente. Insbesondere zu diesem Zweck kann das Aktivieren der Ablenkanordnung eine Veränderung eines Aktivierungsmusters der Ablenkanordnung umfassen, wobei jedes Aktivierungsmuster einer anderen Bewegungsfigur des Strahlfokus entspricht. Beispielsweise kann ein erstes Aktivierungsmuster einer transversalen Linienbewegung (Linienscan) des Strahlfokus entsprechen, die allein durch oszillierende Aktivierung einer ersten Ablenkkomponente erzielt wird. Ein zweites Aktivierungsmuster kann dann einem gleichermaßen transversalen Linienscan entsprechen, der jedoch senkrecht zum Linienscan des ersten Aktivierungsmusters verläuft und allein von einer zweiten Ablenkkomponente erzielt wird.

Ein drittes Ablenkmuster kann beispielsweise einer Kreisbahn entsprechen, zu deren Realisierung die erwähnte erste sowie die zweite Ablenkkomponente gemeinsam aktiviert werden können. Auf diese Weise kann nicht nur der individuelle Einfluss der Ablenkkomponenten auf das dynamische Verhalten der Fokussierbarkeit des Laserstrahls ermittelt werden, sondern auch der kombinierte Einfluss.

Es versteht sich, dass die Ablenkanordnung alternativ oder zusätzlich nach Maßgabe beliebiger anderer Scanfiguren aktiviert werden kann. Insbesondere können solche anderen Scanfiguren eine ausschließliche oder zumindest teilweise z-Bewegung des Strahlfokus (longitudinale Fokusverstellung) beinhalten.

Das erfindungsgemäße Verfahren kann ferner das Ausgeben der gemessenen Leistung oder/und mindestens einer hiervon abgeleiteten Größe auf mindestens einem Ausgabegerät umfassen. Das Ausgabegerät kann beispielsweise ein Monitor, ein Oszilloskop oder ein Drucker sein. Insbesondere kann der Ausgabeschritt das Ausgeben eines zeitlichen Verlaufs oder/und eines Frequenzspektrums der gemessenen Leistung auf dem Ausgabegerät umfassen. Als abgeleitete Größe der gemessenen Leistung sind beispielsweise ein über den Messzeitraum gemittelter Durchschnittswert der Leistung oder/und Extremwerte der gemessenen Leistung (Minima, Maxima) oder/und Werte für die Standardabweichung oder/und Varianz der in einem gegebenen Messzeitraum gemessenen Leistung vorstellbar. Auch die Spektralamplituden eines ermittelten Frequenzspektrums der gemessenen Leistung können als abgeleitete Größe im Sinne der Erfindung aufgefasst werden.

Soweit im Rahmen der Untersuchung des Lasersystems der dynamische Einfluss der Ablenkanordnung auf die Fokussierbarkeit des Laserstrahls für unterschiedliche Oszillationsfrequenzen oder/und unterschiedliche Oszillationshübe oder/und unterschiedliche Aktivierungsmuster der Ablenkanordnung untersucht wird, empfiehlt es sich, die gemessene Leistung oder/und die mindestens eine abgeleitete Größe getrennt für unterschiedliche Werte der Frequenz oder/und des Hubs oder/und für unterschiedliche Muster einer oszillierenden Verstellung mindestens einer Ablenkkomponente der Ablenkanordnung auszugeben.

Die Erfindung kann dazu genutzt werden, Ablenkkomponenten, die bestimmte qualitative Anforderungen nicht erfüllen, aufzufinden und auszusondern. Hierfür ist es vorteilhaft, wenn das Verfahren einen Schritt des Vergleichens der gemessenen Leistung oder/und mindestens einer hiervon abgeleiteten Größe mit mindestens einem vorgegebenen Referenzwert umfasst.

Der Referenzwert kann hersteller- oder anwenderseitig vorgegeben sein oder er kann aus vorhergehenden Messungen, die mit anderen Ablenkanordnungen durchgeführt wurden, ermittelt worden sein. Beispielsweise kann der Referenzwert ein Messwert sein, der für eine als akzeptabel qualifizierte Ablenkanordnung (oder eine Ablenkkomponente hiervon) ermittelt wurde. Es ist auch möglich, den Referenzwert aus einer Vielzahl von Messwerten zu ermitteln, die im Rahmen früherer Untersuchungen mehrerer verschiedener Ablenkanordnungen ermittelt wurden.

Je nach Ergebnis des Vergleichs der gemessenen Leistung oder/und der mindestens einen hiervon abgeleiteten Größe mit dem mindestens einen Referenzwert kann die Qualität der untersuchten Ablenkanordnung beurteilt und gegebenenfalls ein Austausch der untersuchten Ablenkanordnung oder zumindest eines Teils derselben angeordnet werden. Der Vergleich kann vom Untersuchungspersonal selbst vorgenommen werden. Es ist auch möglich, dass das Lasersystem mit einer geeigneten elektronischen Auswerteeinheit ausgerüstet ist, welche den Vergleich automatisch durchführt und dem Untersuchungspersonal über eine geeignete Schnittstelle das Vergleichsergebnis mitteilt.

Das erfindungsgemäße Verfahren eignet sich insbesondere für Reihenuntersuchungen, bei denen die Leistungsmessung der frequenzvervielfachten Strahlung mehrmals parallel oder zeitlich nacheinander mit jeweils zumindest teilweise unterschiedlicher Ablenkanordnung durchgeführt wird. Dies ermöglicht es beispielsweise einem Hersteller, die von ihm hergestellten Ablenkkomponenten individuell zu prüfen, bevor sie an Abnehmer ausgeliefert werden.

Alternativ oder zusätzlich eignet sich das erfindungsgemäße Verfahren für eine Online-Überwachung der Wellenfrontqualität des Laserstrahls, indem die frequenzvervielfachte Strahlung aus dem Teilstrahl erzeugt wird und die Leistungsmessung während einer Bearbeitung eines Materials mit dem Laserstrahl durchgeführt wird. Die Leistungsmessung kann dabei fortlaufend oder zumindest in zeitlichen Abständen wiederholt durchgeführt werden. Zeigen die Ergebnisse der Leistungsmessung eine Verschlechterung der Wellenfrontqualität an, kann dies zum Anlass genommen werden, die Bearbeitung des Materials abzubrechen oder zumindest vorübergehend auszusetzen. Es versteht sich, dass eine solche Bearbeitungsunterbrechung bzw. -aussetzung automatisch von einer geeigneten Steuereinheit des Lasersystems vorgenommen werden kann.

Nach einem weiteren Gesichtspunkt sieht die Erfindung eine Einrichtung zur Untersuchung eines Lasersystems vor, welches einen fokussierten Laserstrahl bereitstellt und eine steuerbare Ablenkanordnung zur transversalen oder/und longitudinalen Ortssteuerung des Strahlfokus aufweist. Insbesondere kann diese Einrichtung die Untersuchung des Lasersystems unter Anwendung eines Verfahrens der vorstehend beschriebenen Art durchführen. Die Einrichtung umfasst:
- einen Frequenzvervielfacher zur Erzeugung frequenzvervielfachter Strahlung aus dem Laserstrahl oder einem daraus nach der Ablenkanordnung abgezweigten Teilstrahl, wobei die Wellenlänge der frequenzvervielfachten Strahlung einer ungeraden höheren Harmonischen der Wellenlänge des Laserstrahls entspricht,
- eine Messanordnung zur Messung einer Leistung der frequenzvervielfachten Strahlung,
- ein Testprogramm, welches bei seiner Ausführung durch eine die Ablenkanordnung steuernde programmgesteuerte Steuereinheit eine solche oszillierende Verstellung mindestens einer Ablenkkomponente der Ablenkanordnung bewirkt, dass der Strahlfokus mehrmals nacheinander denselben Bewegungsweg beschreibt.
In einer bevorzugten Ausgestaltung kann das Testprogramm bei seiner Ausführung durch die Steuereinheit bewirken, dass der Strahlfokus denselben Bewegungsweg (z.B. Linie, Kreis) mit variierender Oszillationsfrequenz der mindestens einen Ablenkkomponente beschreibt. Alternativ oder zusätzlich kann das Testprogramm bei seiner Ausführung durch die Steuereinheit bewirken, dass der Strahlfokus nacheinander unterschiedliche Bewegungswege beschreibt. Die unterschiedlichen Bewegungswege können beispielsweise zwei in einer Transversalebene quer, insbesondere senkrecht zueinander verlaufende Geraden umfassen. Es ist auch möglich, dass einer der unterschiedlichen Bewegungswege eine in einer Transversalebene verlaufende Kreisbahn ist. Die Erfindung wird durch die beigefügten Ansprüche definiert. Die Erfindung wird nachfolgend anhand der beigefügten Zeichnungen näher erläutert. Es stellen dar:
Figur 1 schematisch ein Ausführungsbeispiel eines Lasersystems sowie einer Einrichtung zur Untersuchung der dynamischen Strahlungsqualität der von dem Lasersystem erzeugten Laserstrahlung,
Figuren 2a, b und c beispielhafte Scanfiguren zur Untersuchung dynamischer Verzerrungen der Wellenfront der Laserstrahlung des Lasersystem der Figur 1,
Figur 3 ein Beispiel für ein mögliches Messresultat bei unterschiedlichen Scanfrequenzen.

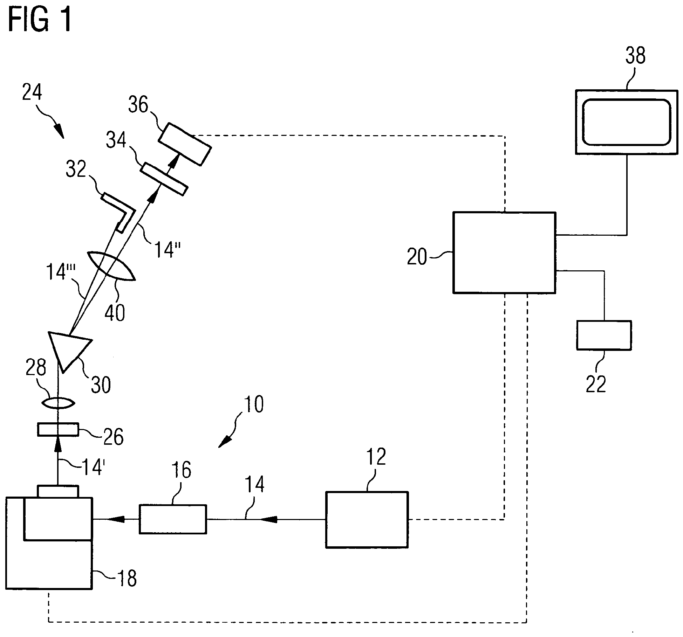

Das in Figur 1 gezeigte und dort allgemein mit 10 bezeichnete Lasersystem weist eine Laserquelle 12 für gepulste Laserstrahlung mit Pulsdauern im Femtosekundenbereich (z.B. einige wenige 100 fs) auf. Die Strahlung verlässt die Laserquelle 12 in Form eines Laserstrahls 14, welcher mittels einer beispielsweise von einem Galilei-Teleskop gebildeten Strahlaufweitungsoptik 16 aufgeweitet und anschließend mittels einer Scan- und Fokussiereinheit 18 abgetastet und fokussiert wird. Die Scan- und Fokussiereinheit 18 enthält nicht näher dargestellte Komponenten zur transversalen und vorzugsweise auch longitudinalen Ortssteuerung des Strahlfokus. Beispielsweise umfassen diese Komponenten ein Paar galvanometrisch gesteuerte Ablenkspiegel, welche um zwei zueinander senkrechte Kipprichtungen verschwenkbar sind und ein transversales Scannen des Laserstrahls 14 ermöglichen. Für das longitudinale Scannen des Laserstrahls 14 kann die Scan- und Fokussiereinheit 18 beispielsweise eine in Richtung des Strahlengangs verstellbare Linse oder Linsengruppe umfassen. Alternativ ist eine longitudinale Fokussteuerung beispielsweise möglich, indem bei unveränderter Fokussiereinstellung eine Linse der Strahlaufweitungsoptik 16 verstellt wird, beispielsweise durch Linearbewegung in Strahlrichtung oder durch Brechkraftvariation im Fall einer brechkraftvariablen Linse.

Zum Zwecke der Veranschaulichung sei nachfolgend davon ausgegangen, dass sämtliche für die transversale und longitudinale Fokussteuerung nötigen optischen Komponenten in der Scan- und Fokussiereinheit 18 zusammengefasst sind. Es ist selbstverständlich zu verstehen, dass diese Komponenten (Ablenkkomponenten) zumindest teilweise innerhalb des Lasersystems 10 verteilt angeordnet sein können. Insbesondere die Funktionen der transversalen Ablenkung und der longitudinalen Ablenkung können komponentenmäßig auf unterschiedliche Baueinheiten aufgeteilt sein.

Zur Fokussierung kann die Scan- und Fokussiereinheit 18 beispielsweise ein F-Theta-Objektiv enthalten. Der von der Scan- und Fokussiereinheit 18 ausgegebene fokussierte Laserstrahl ist mit 14' bezeichnet.

Ein programmgesteuerter Steuerrechner 20 steuert die Laserquelle 12 sowie die Scan- und Fokussiereinheit 18 nach Maßgabe eines in einem Speicher 22 abgespeicherten Steuerprogramms. Für die Bearbeitung eines Materials, etwa humanen Augengewebes, repräsentiert das Steuerprogramm eine zu erzielende Schnittfigur. Diese Schnittfigur kann beispielsweise ein Flapschnitt sein, wie er für die Erzeugung eines Flaps bei einer LASIK-Behandlung des menschlichen Auges nötig ist. Beispielhafte andere Schnittfiguren sind ein sogenannter Lentikelschnitt, wie er für die korneale Lentikelextraktion benötigt wird, sowie ein kornealer Endothelschnitt, wie er für eine Endothel-Keratoplastik an der menschlichen Kornea benötigt wird.

Schnelle mechanische Verstellungen der im Strahlengang des Laserstrahls 14 befindlichen optischen Komponenten können zu temporären Verformungen dieser Komponenten und damit einhergehend zu unerwünschten Wellenfrontverzerrungen der Laserstrahlung führen. Die Dynamik dieser Wellenfrontverzerrungen ist eine wichtige Information für den Anwender des Lasersystems 10. Schließlich setzen solche Wellenfrontverzerrungen die Fokussierbarkeit des Laserstrahls 14 herab, was sich auf die Schneidpräzision nachteilig auswirken kann. Stellvorgänge, die mit einer Schnelle ausgeführt werden, welche zu den erwähnten dynamischen Beeinträchtigungen der Wellenfrontqualität führen können, sind insbesondere beim Scannen des Laserstrahls 14 möglich. Beispielsweise können die für die transversale Fokussteuerung eingesetzten Scannerspiegel aufgrund ihrer Massenträgheit vorübergehende Verformungen an den Spiegelrändern erfahren, wenn die Spiegel hinreichend schnell bewegt werden.

Um die dynamische Qualität des Lasersystems 10 und insbesondere der für örtliche Fokussteuerung dienenden optischen Komponenten untersuchen zu können, ist eine allgemein mit 24 bezeichnete Testeinrichtung vorgesehen, welche aus dem fokussierten Laserstrahl 14' oder einem davon z.B. durch einen Teilerspiegel abgezweigten Teilstrahl einen frequenzvervielfachten Strahl 14" dritter oder höherer ungerader Ordnung erzeugt und dessen Leistung misst. Hierzu umfasst die Testeinrichtung 24 ein im Fokus des fokussierten Laserstrahls 14' anzuordnendes optisch-nichtlineares Medium 26, das in einem nichtlinearen Prozess Strahlung mit der entsprechend vervielfachten Frequenz des Laserstrahls 14 erzeugt. Das nichtlineare Medium 26 ist isotrop, um eine von der Einstrahlrichtung des fokussierten Laserstrahls 14' unabhängige Umwandlungseffizienz zu ermöglichen. Da die Untersuchung des Lasersystems 10 bei aktivierter Scanfunktion erfolgt, d.h. während der Laserstrahl 14 mittels der Scan- und Fokussiereinheit 18 gescant wird, ändert sich zumindest bei transversalem Scannen die Richtung, mit der der fokussierte Laserstrahl 14' auf das nichtlineare Medium 26 trifft. Die Isotropie des nichtlinearen Mediums 26 ermöglicht es, den Einfluss solcher Richtungsänderungen des fokussierten Laserstrahls 14' auf die Umwandlungseffizienz auszuschalten.

Mittels einer dem nichtlinearen Medium 26 nachgeschalteten Sammellinse 28 wird die aus dem Medium 26 austretende Strahlung auf einen hier von einem Prisma gebildeten Wellenlängenseparator 30 gerichtet. Der Separator 30 trennt die verbleibende Grundwellenstrahlung (d.h. die Strahlung bei der Wellenlänge des Laserstrahls 14) von der erzeugten frequenzverdreifachten Strahlung. Die Grundwellenstrahlung - dargestellt durch einen Strahl 14'" wird in einer Strahlfalle 32 absorbiert, während die durch den Strahl 14" dargestellte frequenzverdreifachte Strahlung durch ein optisches Filter 34 zu einem Leistungsmesser 36 gelangt. Der Leistungsmesser 36 gibt ein für die gemessene Leistung des frequenzverdreifachten Strahls 14" repräsentatives Messsignal an den Steuerrechner 20 ab. Dieser zeigt auf einem hier beispielhaft als Monitor dargestellten Ausgabegerät 38 Werte (z. B den zeitlichen Verlauf) für die gemessene Leistung des frequenzverdreifachten Strahls 14" oder/und Werte mindestens einer aus der gemessenen Leistung abgeleiteten Größe an. Der Leistungsmesser 36 kann beispielsweise von einer mit einer Ulbrichtkugel kombinierten Fotodiode gebildet sein. Ulbrichtkugeln sind in der Fachwelt an sich bekannt; sie ermöglichen eine von der Einfallsrichtung der zu messenden Laserstrahlung unabhängige Leistungsmessung.

Das Filter 34 filtert etwaige störende Nebenlinien sowie Reste der Grundwellenlänge aus der frequenzverdreifachten Strahlung heraus. Eine dem Wellenlängenseparator 30 nachgeschaltete weitere Sammellinse 40 sammelt die verschiedenen Strahlungsanteile und führt sie der Strahlfalle 32 (für die Grundwellenstrahlung) bzw. dem Leistungsmesser 36 (für die frequenzverdreifachte Strahlung) zu.

Die Komponenten 26, 28, 30, 32, 34, 36, 40 können als Baueinheit in einem gemeinsamen Gehäuse (nicht näher dargestellt) zusammengefasst sein, was die Handhabung der Testeinrichtung 24 und die Untersuchung des Lasersystems 10 besonders einfach macht.

Zur Durchführung einer Untersuchung des Lasersystems 10 mittels der Testeinrichtung 24 wird die Scan- und Fokussiereinheit 18 von dem Steuerrechner 20 so gesteuert, dass der auf das nichtlineare Medium 26 fokussierte Laserstrahl 14' mindestens eine vorgegebene Scanfigur beschreibt. Zweckmäßigerweise erfolgt die Steuerung derart, dass der Laserstrahl 14' nacheinander mehrere verschiedene Scanfiguren beschreibt. Zu diesem Zweck ist in dem Speicher 22 ein Testprogramm abgespeichert oder abspeicherbar, das geeignete Steueranweisungen enthält, um diese Scanfigur(en) zu bewirken.

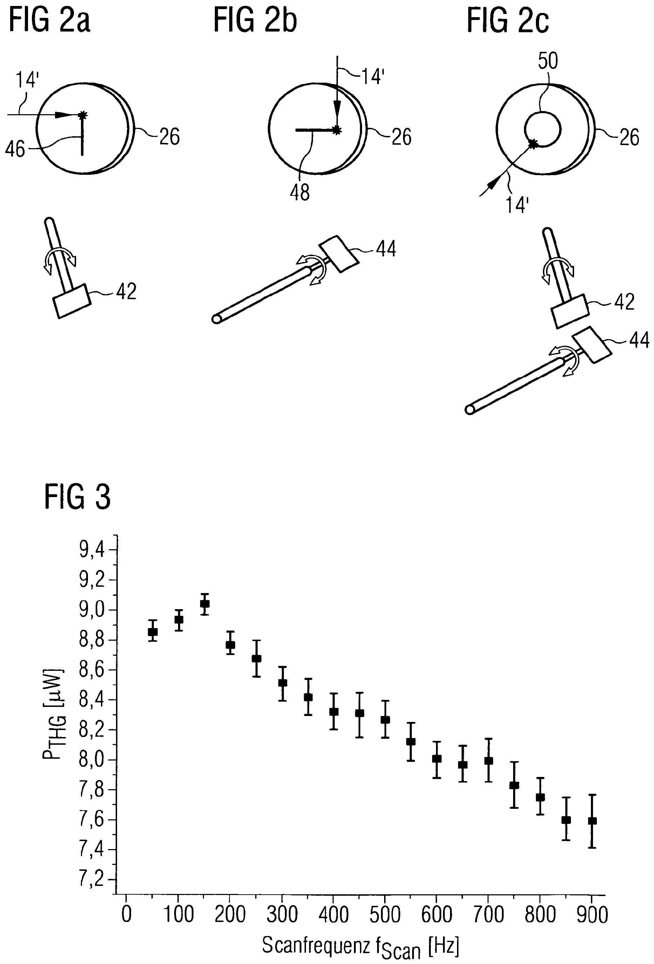

Für mögliche Scanfiguren wird nun zusätzlich auf die Figuren 2a bis 2c verwiesen. In diesen Figuren ist das nichtlineare Medium 26 schematisch als scheibenförmiger Körper dargestellt. Es versteht sich, dass dies keinerlei Beschränkung darstellen soll und dass stattdessen beliebige körperliche Ausgestaltungen für das nichtlineare Medium 26 möglich sind.

In den Figuren 2a bis 2c sind ferner Scannerspiegel 42, 44 mit ihren jeweiligen Antriebsachsen gezeigt, welche ein für die transversale Fokussteuerung dienendes Spiegelpaar bilden und in der Scan- und Fokussiereinheit 18 des Lasersystems 10 Anwendung finden können.

Gemäß Figur 2a besteht eine erste Scanfigur aus einer geraden Scanlinie 46, welche durch oszillierende Hin- und Herverkippung eines der beiden Scannerspiegel, hier des Spiegels 42, realisierbar ist. Der andere Scannerspiegel 44 steht bei dieser Scanfigur still; es kann so der dynamische Einfluss des Scannerspiegels 42 auf die Fokussierbarkeit des Laserstrahls 14 untersucht werden.

Gemäß Figur 2b ist eine zweite Scanfigur gleichermaßen von einer geraden Linie 48 gebildet, die jedoch senkrecht zur Scanlinie 46 der Figur 2a liegt und bei alleiniger Hin- und Herverkippung des Scannerspiegels 44 erzielt wird. Der Scannerspiegel 42 steht in diesem Fall still. Dies ermöglicht eine Untersuchung des dynamischen Einflusses des Scannerspiegels 44 auf die Strahlungsqualität des fokussierten Laserstrahls 14'.

Gemäß Figur 2c kann durch gleichzeitige Hin- und Herverkippung beider Scannerspiegel 42, 44 eine Kreisbahn 50 als Scanfigur realisiert werden. Nachdem bei praktischen Anwendungen häufig beide Scannerspiegel 42, 44 gleichzeitig bewegt werden, ist eine solche Untersuchung sinnvoll, um den dynamischen Einfluss beider Scannerspiegel 42, 44 zusammen auf die Strahlungsqualität zu untersuchen.

Das Testprogramm für den Steuerrechner 20 kann nicht nur eine Realisierung verschiedener Scanfiguren (wie sie beispielsweise in den Figuren 2a bis 2c gezeigt sind) bewirken. Es kann alternativ oder zusätzlich dazu ausgestaltet sein, mindestens eine Scanfigur mit variierender Oszillationsfrequenz oder/und variierendem Oszillationshub der betreffenden Ablenkkomponente(n) zu verwirklichen. Ein variierender Oszillationshub kann beispielsweise im Fall der Figur 2a eine Verkürzung oder Verlängerung der Scanlinie 46 bewirken. Im Fall der Figur 2c kann eine solche Variation eine Verkleinerung oder Vergrößerung des Durchmessers der Kreisbahn 50 (sofern der Oszillationshub beider Scannerspiegel 42, 44 gleichartig verstellt wird) oder eine Verzerrung der Kreisbahn 50 zu einer elliptischen Bahn (bei ungleichmäßiger Variation des Oszillationshubs der Scannerspiegel 42, 44) bewirken.

Eine Variation der Oszillationsfrequenz bewirkt dagegen, dass die betreffende Scanfigur schneller oder langsamer durchlaufen wird.

Die mittels des Leistungsmessers 36 gewonnenen Messwerte können in dem Speicher 22 gespeichert werden, gegebenenfalls zusammen mit etwaigen abgeleiteten Werten, die vom Steuerrechner 20 aus ihnen berechnet werden. Die Ausgabe auf dem Ausgabegerät 38 kann dann zu einem späteren Zeitpunkt erfolgen, nachdem bereits eine Reihe von Messungen durchgeführt wurden. Es ist aber gleichwohl vorstellbar, die gemessenen Leistungswerte sozusagen in Echtzeit auf dem Ausgabegerät 38 auszugeben, beispielsweise in Form eines Oszillogramms. Ein solches Oszillogramm zeigt den zeitlichen Verlauf der gemessenen Leistung während einer oder mehrerer Oszillationsperioden. Anhand der Schwankungen der Leistung während einer Oszillationsperiode lässt sich eine Aussage über das Ausmaß der Wellenfrontverzerrungen treffen, die durch die massenbedingte Trägheit der betreffenden Ablenkkomponente(n) hervorgerufen werden.

Alternativ oder zusätzlich zu einem solchen Oszillogramm ist ein Ausgabebild möglich, wie es beispielhaft in Figur 3 gezeigt ist. Die dort gezeigten Zahlenwerte basieren auf Messungen, die bei einem Kreisscan ähnlich Figur 2 bei Variation der Oszillationsfrequenz der verwendeten Scannerspiegel zwischen 50 und 900 Hz und einer Leistung des Laserstrahls von 132,5 mW ermittelt wurden. Auf der Ordinate des Diagramms der Figur 3 ist die Leistung P_{THG} der frequenzverdreifachten Strahlung in µW aufgetragen. Die eingezeichneten Symbole stellen jeweils die durchschnittliche Leistung während eines einminütigen Kreisscans bei der betreffenden Frequenz (schwarz ausgefülltes Quadrat) sowie die Standardabweichung der gemessenen Leistung bei der betreffenden Frequenz (vertikale Linie mit horizontalen Querstrichen) dar. Man erkennt, dass die mittlere Leistung der frequenzverdreifachten Strahlung bei größer werdender Scanfrequenz abnimmt. Gleichzeitig nimmt die Standardabweichung der gemessenen Leistung bei größer werdender Abtastfrequenz zu. Dies lässt sich dadurch erklären, dass die Deformationen an den Umkehrpunkten der Spiegeloszillation umso stärker sind, je höher die Scanfrequenz ist. Aus der Frequenzabhängigkeit der Leistung lassen sich daher gleichermaßen Rückschlüsse über die Qualität der verwendeten Scannerspiegel ziehen. Ist bei einem vermessenen Scannerspiegel oder einem vermessenen Spiegelpaar der Leistungsabfall zu höheren Frequenzen hin stärker als bei einem für ordnungsgemäß bewerteten Referenzspiegel bzw. einem Referenzspiegelpaar, kann dies vom Anwender zum Anlass genommen werden, den Spiegel bzw. das Spiegelpaar auszutauschen und als ungeeignet auszusondern. Ähnliches gilt bei Untersuchungen des zeitlichen Verlaufs der Leistung während einer Oszillationsperiode. Auf hier kann eine Analyse des zeitlichen Verlaufs und ein Vergleich mit geeigneten Referenzdaten Aufschluss über die mechanische Qualität der untersuchten Ablenkkomponenten geben.

Es wurde bereits erwähnt, dass der frequenzvervielfachte Strahl 14" aus einem Teilstrahl erzeugt werden kann, der aus dem Laserstrahl 14' abgezweigt wird. Das heißt, es muss nicht der gesamte Laserstrahl 14' für die Untersuchung der Strahlungsqualität des Lasersystems 10 herangezogen werden; stattdessen genügt es, einen Bruchteil (z.B. etwa 5 bis 10 %) aus dem Laserstrahl 14' auszukoppeln, beispielsweise mittels eines in den Zeichnungen nicht näher dargestellten Teilerspiegels. Damit der Teilstrahl zur Untersuchung der Auswirkung der Hochgeschwindigkeitsbewegungen der Ablenkkomponenten auf die Wellenfrontqualität genutzt werden kann, wird er in Strahlrichtung nach denjenigen Komponenten der Scan- und Fokussiereinheit 18 abgezweigt, welche die Scanfunktion bewirken, zweckmäßigerweise jedoch vor den Fokussierkomponenten der Einheit 18. Für eine Fokussierung des abgezweigten Teilstrahls auf das nichtlineare Medium 26 kann eine gesonderte Fokussierlinse vorgesehen sein, die in den Zeichnungen ebenfalls nicht näher dargestellt ist. Mit einer solchen Ausgestaltung sind Online-Untersuchungen des Lasersystems 24 möglich, d.h. es kann unmittelbar während der Bearbeitung eines Materials mit dem Laserstrahl 14' (Hauptstrahl) die Strahlungsqualität anhand des Teilstrahls untersucht werden.

## Patentansprüche

1. Verfahren zur Untersuchung eines Lasersystems, welches einen fokussierten Laserstrahl (14') bereitstellt und eine steuerbare Ablenkanordnung (18) zur transversalen oder/und longitudinalen Ortssteuerung des Strahlfokus aufweist, wobei das Verfahren umfasst:
- Richten des Laserstrahls oder eines daraus nach der Ablenkanordnung abgezweigten Teilstrahls auf ein optisch-nichtlineares Medium (26) zur Erzeugung frequenzvervielfachter Strahlung (14"), deren Wellenlänge einer ungeraden höheren Harmonischen der Wellenlänge des Laserstrahls entspricht, wobei der Laserstrahl (14') bzw. der Teilstrahl auf das nichtlineare Medium (26) fokussiert wird,
- Aktivieren der Ablenkanordnung, wobei das Aktivieren der Ablenkanordnung eine oszillierende Verstellung mindestens einer Ablenkkomponente (42, 44) der Ablenkanordnung und ferner eine Veränderung der Oszillationsfrequenz oder/und des Oszillationshubs der mindestens einen Ablenkkomponente (42, 44) und/oder eine Veränderung eines Aktivierungsmusters der Ablenkanordnung umfasst, wobei jedes Aktivierungsmuster einer anderen Bewegungsfigur des Strahlfokus entspricht,
- Messen einer Leistung der frequenzvervielfachten Strahlung bei aktivierter Ablenkanordnung, und
- Ausgeben eines zeitlichen Verlaufs oder/und eines Frequenzspektrums der gemessenen Leistung auf einem Ausgabegerät (38).

2. Verfahren nach Anspruch 1, umfassend das Ausgeben der gemessenen Leistung oder/und der mindestens einen abgeleiteten Größe getrennt für unterschiedliche Werte der Frequenz oder/und des Hubs oder/und für unterschiedliche Muster einer oszillierenden Verstellung mindestens einer Ablenkkomponente (42, 44) der Ablenkanordnung (18).

3. Verfahren nach einem der Ansprüche 1 bis 2, ferner umfassend das Vergleichen der gemessenen Leistung oder/und mindestens einer hiervon abgeleiteten Größe mit mindestens einem vorgegebenen Referenzwert.

4. Verfahren nach einem der Ansprüche 1 bis 3, umfassend eine mehrmalige Durchführung der Leistungsmessung der frequenzvervielfachten Strahlung, wobei zwischen den Messungen jeweils mindestens eine Ablenkkomponente (42, 44) der Ablenkanordnung (18) ausgewechselt wird.

5. Verfahren nach einem der Ansprüche 1 bis 4, wobei die frequenzvervielfachte Strahlung aus dem Teilstrahl erzeugt wird und die Leistungsmessung während einer Bearbeitung eines Materials mit dem Laserstrahl durchgeführt wird.

6. Einrichtung zur Untersuchung eines Lasersystems (10), welches einen fokussierten Laserstrahl (14') bereitstellt und eine steuerbare Ablenkanordnung (18) zur transversalen oder/und longitudinalen Ortssteuerung des Strahlfokus aufweist,
wobei die Einrichtung umfasst:
- einen Frequenzvervielfacher (26) zur Erzeugung frequenzvervielfachter Strahlung (14") aus dem Laserstrahl oder einem daraus nach der Ablenkanordnung abgezweigten Teilstrahl, wobei die Wellenlänge der frequenzvervielfachten Strahlung einer ungeraden höheren Harmonischen der Wellenlänge des Laserstrahls entspricht, wobei der Frequenzvervielfacher ein optisch-nichtlineares Medium umfasst, auf das der Laserstrahl bzw. der Teilstrahl fokussiert wird,
- eine Messanordnung (36) zur Messung einer Leistung der frequenzvervielfachten Strahlung,
- ein Testprogramm, welches bei seiner Ausführung durch eine die Ablenkanordnung steuernde programmgesteuerte Steuereinheit (20) eine solche oszillierende Verstellung mindestens einer Ablenkkomponente (42, 44) der Ablenkanordnung bewirkt, dass der Strahlfokus mehrmals nacheinander denselben Bewegungsweg mit variierender Oszillationsfrequenz der mindestens einen Ablenkkomponente (42, 44) und/oder nacheinander unterschiedliche Bewegungswege beschreibt,
- ein Ausgabegerät, um einen zeitlichen Verlauf oder/und ein Frequenzspektrum der gemessenen Leistung darauf auszugeben.

7. Einrichtung nach Anspruch 6, wobei die unterschiedlichen Bewegungswege zwei in einer Transversalebene quer, insbesondere senkrecht zueinander verlaufende Geraden (46, 48) umfassen oder/und wobei einer der unterschiedlichen Bewegungswege eine in einer Transversalebene verlaufende Kreisbahn (50) ist.

## Claims

1. Method for examining a laser system which provides a focused laser beam (14') and has a controllable deflection arrangement (18) for the transverse or/and longitudinal location control of the beam focus, wherein the method comprises the following steps:
- directing the laser beam, or a partial beam that is split therefrom downstream of the deflection arrangement, onto an optically nonlinear medium (26) for producing frequency-multiplied radiation (14"), the wavelength of which corresponds to an odd higher harmonic of the wavelength of the laser beam, wherein the laser beam (14') or the partial beam is focused onto the nonlinear medium (26),
- activating the deflection arrangement, wherein the activation of the deflection arrangement comprises an oscillating adjustment of at least one deflection component (42, 44) of the deflection arrangement and furthermore changing the oscillation frequency or/and the oscillation stroke of the at least one deflection component (42, 44) and/or changing an activation pattern of the deflection arrangement, wherein each activation pattern corresponds to a different movement figure of the beam focus,
- measuring a power of the frequency-multiplied radiation in the case of an activated deflection arrangement, and
- outputting a temporal profile or/and a frequency spectrum of the measured power on an output device (38).

2. Method according to Claim 1, comprising outputting the measured power or/and the at least one derived variable separately for different values of the frequency or/and of the stroke or/and for different patterns of an oscillating adjustment of at least one deflection component (42, 44) of the deflection arrangement (18).

3. Method according to one of Claims 1 to 2, furthermore comprising comparing the measured power or/and at least one variable derived therefrom with at least one predetermined reference value.

4. Method according to one of Claims 1 to 3, comprising repeated performance of the power measurement of the frequency-multiplied radiation, wherein in each case at least one deflection component (42, 44) of the deflection arrangement (18) is interchanged between measurements.

5. Method according to one of Claims 1 to 4, wherein the frequency-multiplied radiation is produced from the partial beam and the power measurement is performed during processing of a material with the laser beam.

6. Apparatus for examining a laser system (10) which provides a focused laser beam (14') and a controllable deflection arrangement (18) for the transverse or/and longitudinal location control of the beam focus, wherein the apparatus comprises:
- a frequency multiplier (26) for producing frequency-multiplied radiation (14") from the laser beam or from a partial beam that is split therefrom downstream of the deflection arrangement, wherein the wavelength of the frequency-multiplied radiation corresponds to an odd higher harmonic of the wavelength of the laser beam, wherein the frequency multiplier comprises an optically nonlinear medium onto which the laser beam or the partial beam is focused,
- a measurement arrangement (36) for measuring a power of the frequency-multiplied radiation,
- a test program which, upon execution by a program-controlled control unit (20) controlling the deflection arrangement, effects oscillating adjustment of at least one deflection component (42, 44) of the deflection arrangement such that the beam focus travels the same movement path repeatedly in succession with varying oscillation frequency of the at least one deflection component (42, 44) and/or successively different movement paths,
- an output device for outputting a temporal profile or/and a frequency spectrum of the measured power thereof.

7. Apparatus according to Claim 6, wherein the different movement paths comprise two straight lines (46, 48) which extend in a transverse plane at an angle, in particular perpendicular, to one another, or/and wherein one of the different movement paths is a circular path (50) which extends in a transverse plane.

## Revendications

1. Procédé destiné à l'analyse d'un système à laser, lequel est capable d'émettre un faisceau laser (14') focalisé et présente un agencement de déviation (18) pouvant être commandé et destiné à la commande de la localisation transversale ou/et longitudinale du foyer du faisceau, le procédé comprenant :
- le pointage du faisceau lasser ou d'un faisceau partiel, qui en est dérivé en aval de l'agencement de déviation, sur un milieu (26) optiquement non linéaire en vue de la production d'un faisceau (14") dont la fréquence est multipliée et dont la longueur d'onde correspond à une harmonique supérieure, impaire de la longueur d'onde du faisceau laser, le faisceau laser (14'), respectivement le faisceau partiel, étant focalisé sur le milieu (26) non linéaire ;
- l'activation de l'agencement de déviation, l'activation de l'agencement de déviation comprenant un décalage oscillant d'au moins un composant de déviation (42, 44) de l'agencement de déviation et, en outre, une modification de la fréquence d'oscillation ou/et de la course d'oscillation de l'au moins un composant de déviation (42, 44) et/ou une modification d'un schéma d'activation de l'agencement de déviation, chaque schéma d'activation correspondant à une autre figure de déplacement du foyer du faisceau ;
- la mesure d'une puissance du faisceau dont la fréquence est multipliée, quand l'agencement de déviation est activé ; et
- l'émission d'une variation dans le temps ou/et d'un spectre de la fréquence de la puissance mesurée sur un périphérique de sortie (38).

2. Procédé selon la revendication 1, comprenant l'emission de la puissance mesurée ou/et de l'au moins une grandeur dérivée, séparée pour diverses valeurs de la fréquence ou/et de la course ou/et pour divers schémas d'un décalage oscillant d'au moins un composant de déviation (42, 44) de l'agencement de déviation (18).

3. Procédé selon l'une des revendications 1 à 2, comprenant en outre la comparaison de la puissance mesurée ou/et au moins une grandeur qui en est dérivée, avec au moins une valeur de référence prédéfinie.

4. Procédé selon l'une des revendications 1 à 3, comprenant une réalisation multiple de la mesure de la puissance du faisceau dont la fréquence est multipliée, dans lequel respectivement au moins un composant de déviation (42, 44) de l'agencement de déviation (18) est remplacé entre les mesures.

5. Procédé selon l'une des revendications 1 à 4, dans lequel le faisceau dont la fréquence est multipliée est produit à partir du faisceau partiel et la mesure de la puissance est réalisée pendant un traitement d'un matériau avec le faisceau laser.

6. Mécanisme destiné à l'analyse d'un système à laser (10), lequel est capable d'émettre un faisceau laser (14') focalisé et présente un agencement de déviation (18) pouvant être commandé et destiné à la commande de la localisation transversale ou/et longitudinale du foyer du faisceau,
ledit mécanisme comprenant :
- un multiplicateur de fréquence (26) destiné à la production d'un faisceau (14"), dont la fréquence est multipliée, à partir du faisceau laser ou d'un faisceau partiel qui en est dérivé en aval de l'agencement de déviation, la longueur d'onde du faisceau dont la fréquence est multipliée correspondant à une harmonique supérieure, impaire de la longueur d'onde du faisceau laser, le multiplicateur de fréquence comprenant un milieu optiquement non linéaire, sur lequel le faisceau laser, respectivement le faisceau partiel est focalisé ;
- un agencement de mesure (36) destiné à la mesure d'une puissance du faisceau dont la fréquence est multipliée ;
- un programme de test qui entraîne, lors de son exécution par une unité de commande (20) à commande programmée, laquelle commande l'agencement de déviation, un tel décalage oscillant d'au moins un composant de déviation (42, 44) de l'agencement de déviation que le foyer du faisceau décrit la même trajectoire plusieurs fois à la suite avec une fréquence d'oscillation variable de l'au moins un composant de déviation (42, 44) et/ou décrit diverses trajectoires à la suite ; et
- un périphérique de sortie en vue d'émettre une variation dans le temps ou/et d'émettre un spectre de la fréquence de la puissance mesurée en réponse à celle-ci.

7. Mécanisme selon la revendication 6, selon lequel les diverses trajectoires comprennent deux droites (46, 48) dont le cheminement est transversal, en particulier perpendiculaire l'une par rapport à l'autre dans un plan transversal ou/et selon lequel l'une des diverses trajectoires est une trajectoire circulaire (50) dont le cheminement court dans un plan transversal.
